# EUROPÄISCHE PATENTSCHRIFT

(11) **EP 1 272 051 B1**
(45) Veröffentlichungstag und Bekanntmachung des Hinweises auf die Patenterteilung: **06.07.2005**
(21) Anmeldenummer: 01940300.5
(22) Anmeldetag: 06.04.2001
(51) Int. Cl.: A23L 1/015, A23K 1/16, A23G 1/02, A23G 1/00, A23L 1/10, A23L 1/164

(54) **VERFAHREN ZUR HERSTELLUNG VON NAHRUNGSMITTELN UND/ODER FUTTERMITTELN DURCH ENTFERNUNG VON UNERWÜNSCHTEN LIPIDEN BESTANDTEILEN MIT HILFE VON ÜBERKRITISCHEM CO2 UND ZUFUHR VON ERWÜNSCHTEN LIPOPHILEN SUBSTANZEN MIT HILFE VON VERDICHTETEM CO2**
METHOD FOR PRODUCING FOODSTUFFS AND/OR FEEDSTUFFS BY REMOVING UNDESIRED LIPID CONSTITUENTS USING SUPERCRITICAL CO2 AND BY INTRODUCING DESIRED LIPOPHILIC SUBSTANCES USING COMPRESSED CO2
PROCEDE D'ELABORATION DE PRODUITS ALIMENTAIRES ET/OU DE FOURRAGE PAR EXTRACTION DE CONSTITUANTS LIPIDIQUES NON SOUHAITES A L'AIDE DE CO2 SUPERCRITIQUE ET INTRODUCTION DE SUBSTANCES LIPOPHILES SOUHAITEES A L'AIDE DE CO2 COMPRIME

(30) Priorität: 14.04.2000 DE 10018606
(43) Veröffentlichungstag der Anmeldung: 08.01.2003
(73) Patentinhaber: Degussa AG, 83308 Trostberg (DE)
(72) Erfinder: HEIDLAS, Jürgen, 83308 Trostberg (DE); STORK, Kurt, 93326 Abensberg (DE); ZHANG, Zhengfeng, 83308 Trostberg (DE); OBER, Martin, 83352 Altenmarkt (DE); WIESMÜLLER, Johann, 84518 Garching (DE); OBERSTEINER, Johann, 84550 Feichten (DE)
(74) Vertreter: Dey, Michael, Dr.
(86) Internationale Anmeldenummer: PCT/EP2001/003984
(87) Internationale Veröffentlichungsnummer: WO 2001/078525

(56) Entgegenhaltungen:
- EP-A- 0 531 104
- EP-A- 0 554 993
- WO-A-93/14649
- DE-A- 3 540 544
- GB-A- 340 580
- US-A- 5 024 846
- US-A- 5 061 505
- US-A- 5 147 672
- US-A- 5 616 352
- MCCANCE & WIDDOWSON'S: "The Composition of Foods - 5th Ed." 1992 , ROYAL SOCIETY OF CHEMISTRY , UK XP002176893 Pages 40, 41, 43 das ganze Dokument

## Beschreibung

Gegenstand der vorliegenden Erfindung ist ein Verfahren zur Herstellung von Nahrungsmitteln und/oder Futtermitteln sowie damit hergestellte Nahrungs- oder Futtermittel.

Veränderte gesellschaftliche Rahmenbedingungen mit ihren Einflüssen auf die Lebensweise, speziell den Tagesablauf, haben zu gravierenden Änderungen insbesondere auch bei den Ernährungsgewohnheiten geführt. Die speziellen Anforderungen im Beruf und in der Freizeit lassen einen zunehmenden Trend zu ernährungsphysiologisch hochwertigen (Klein-)Mahlzeiten erkennen, die im Hinblick auf Zusammensetzung, physiologische Wirkung und Verfügbarkeit den jeweiligen Bedürfnissen speziell angepasst sein sollen.

So versteht man beispielsweise unter Functional Foods Lebensmittel, die neben ihren allgemeinen Eigenschaften als Nahrungsmittel noch einen zusätzlichen Wert für die Gesundheit des Verbrauchers unter ernährungsphysiologischen Gesichtspunkten aufweisen können (G. Nazza Functional Foods, Lancester: Technomic, 1998). Dabei hat die Lebensmitteltechnologie eine Vielzahl möglicher Strategien entwickelt, um diesen zusätzlichen Wert der Functional Foods zu erzielen. So können beispielsweise die bekannten Hauptkomponenten der Lebensmittel (Kohlenhydrate, Fette, Proteine und Aminosäuren) über technologische Maßnahmen gezielt verändert, d.h. modifiziert, angereichert, abgereichert oder ausgetauscht werden.

Diese Möglichkeit erstreckt sich auch auf Nebenkomponenten der Lebensmittel, die ernährungsphysiologisch eine gleichermaßen bedeutende Rolle spielen, wie Vitamine, Mineralstoffe, mehrfach ungesättigte Fettsäuren oder Bestandteile des Unverseifbaren der Öle, insbesondere Sterine und deren Derivate.

Die Herstellung und Konditionierung dieser speziellen Nahrungsmittel setzt zwischenzeitlich einen hoch technisierten Verfahrensablauf voraus und wirkt sich auch auf die Futtermittelherstellung aus.

Insbesondere, wenn zuzusetzende Nebenbestandteile in geringen Konzentrationen gleichmäßig verteilt werden sollen und/oder wenn Lebensmittel hergestellt werden sollen, mit denen ein spezieller physiologischer Effekt erzielt werden soll, können technologische Probleme auftreten. Zudem gibt es Schwierigkeiten, wenn die Nebenbestandteile sehr empfindlich sind, d.h. leicht durch Temperatur und Zutritt von Luft oder Sauerstoff geschädigt werden.

Konventionelle Technologien, wie ein Einmischen oder Aufsprühen der gewünschten Stoffe auf die Matrix des Lebensmittels, sind dann oftmals nur äußerst eingeschränkt einsetzbar. Insbesondere dann, wenn die aktiven Nebenbestandteile nicht über einen Zusatz von Hauptbestandteilen eingemischt werden können. Bspw. ist es technologisch kaum möglich, das bekannte Antioxidans Vitamin E oder andere fettlösliche Nebenbestandteile in die Matrix eines Lebensmittels homogen einzuarbeiten, wenn nicht ausreichend Fettphase für deren Verteilung zur Dosierung zur Verfügung steht. Insbesondere bei Functional Foods, die einen reduzierten Fettgehalt aufweisen, ist diese Problematik offensichtlich.

Aus dem Stand der Technik sind zahlreiche Beispiele für die Herstellung von Nahrungsmitteln mit technisch veränderten Inhaltsstoffen bekannt: So beschreibt beispielsweise die deutsche Patentschrift DE 21 27 642 ein Verfahren, bei dem durch Extrahieren und Sammeln der Aromastoffe, Extraktion des Coffeins und Aufimprägnieren des entkoffeinierten Tees mit den gesammelten Aromastoffen ein koffeinfreier schwarzer Tee erhalten wird. Dieses Verfahren, das für den Extraktionsschritt der Aromastoffe vorzugsweise auf trockenes, überkritisches CO₂ und für die Extraktion des Coffeins auf feuchtes, überkritisches CO₂ zurückgreift, ist aufgrund der in der ersten Verfahrensstufe unterschiedlichen Bedingungen wenig wirtschaftlich und zudem nur sehr beschränkt einsetzbar.

Die US Patentschrift 5,147,672 offenbart ein Verfahren, bei dem Sterole und/oder Lipide aus fetthaltigen Lebensmitteln unter Verwendung eines unter- oder überkritischen Gases abgetrennt werden. Anschließend kann dieser entfetteten Matrix gegebenenfalls das zuvor abgetrennte und vom Cholesterin befreite Fett wieder zugegeben werden, was vorteilhaft mit CO₂ und unter Hochdruckbedingungen geschehen soll. Weiterhin können der entfetteten Matrix Verbindungen, wie z.B. Vitamine, Aromen oder pharmazeutische Verbindungen, zugesetzt werden. Bei diesen Verbindungen, die in US 5,147,672 in die Matrix eingebracht werden, handelt es sich allerdings nur um wasserlösliche Verbindungen, die durch eine Injektion von Wasser bzw. einer wässrigen Lösung der Verbindungen in das unter- oder überkritische Fluid eingebracht werden. Ein Zusatz von erwünschten fettlöslichen bzw. lipophilen ernährungsphysiologisch wertgebenden Zusätzen wird nicht offenbart.

Die US Patentschrift 5,024,846 beschreibt ein Verfahren zur Abtrennung von Sterinen mit Hilfe von unter- oder überkritischem CO₂. Hierbei wird das verdichtete Gas als Lösemittel und Trägermaterial für die abzutrennenden Sterine verwendet, die durch Absorptionsmaterialien selektiv separiert werden. Ein Einbringen von lipophilen Bestandteilen, insbesondere ernährungsphysiologisch wertgebenden Zusätzen in die extrahierte Nahrungsmittelmatrix ist nicht beschrieben.

In US 5,061,505 wird ein Verfahren zur Entfernung von Cholesterin und/oder Cholesterinester aus Nahrungsmittel durch Extraktion mit verdichtetem CO₂ offenbart. Auch in dieser Patentschrift wird kein Einbringen lipophiler Bestandteile, insbesondere ernährungsphysiologisch wertgebender Zusätze mithilfe von verdichtetem CO₂ in die Nahrungsmittelmatrix beschrieben.

Die europäische Patentoffenbarungsschrift EP 0 531 194 beschreibt ein Verfahren zur Entfernung von Lipiden aus lipoproteinhaltigen Substanzen. Ein Einbringen von erwünschten lipophilen Bestandteilen, um verbesserte physiologische Eigenschaften zu erhalten, wird in EP 0 531 104 nicht beschrieben.

Die deutsche Offenlegungsschrift DE 35 40 544 beschreibt ein Verfahren zur Herstellung von Trockennahrungsmitteln. Dieses Verfahren beschreibt weder eine Entfernung unerwünschter lipider Bestandteile noch eine Abtrennung der extrahierten unerwünschten lipiden Bestandteile noch ein Einbringen von erwünschten lipophilen Bestandteilen, die ernährungsphysiologisch wertgebend sind.

In WO 93/14649 wird ein Verfahren zur Herstellung eines diätetischen, Cholesterin-reduzierten Vollei- oder Eigelbproduktes beschrieben. Zur Extraktion des Cholesterols wird ein cholesterolarmes flüssiges Speiseöl verwendet, optional ist eine Anreicherung mit fettlöslichen Vitaminen beschrieben, die aber auch mittels eines Speiseöls durchgeführt wird. WO 93/14649 beschreibt auch eine zusätzliche mit überkritischen Fluiden durchgeführte Extraktion. Allerdings wird diese Hochdrucksextraktion mit Verwendung von pflanzlichem Speiseöl als Extraktionsmittel durchgeführt.

EP 0 554 993 beschreibt ein Verfahren zur Entfernung von Cholesterin in Ei- und Eigelbprodukten. Die Extraktion des Cholesterins erfolgt durch Mischen des Eigelbs mit einem Speiseöl, wobei das Cholesterin vom Eigelb in das Öl extrahiert wird. Die Abtrennung des Speiseöls erfolgt anschließend durch Zentrifugation. Eine Extraktion von Lipiden mithilfe von überkritischem CO₂ wird in EP 0 554 993 nicht erwähnt.

GB 340580 beschreibt ein Verfahren zur Herstellung von Schokolade und Kakaoprodukten, die Vitamine enthalten. Das Einbringen von lipophilen Bestandteilen, wie z.B. Vitamin D, wird nicht beschrieben. Auch das zunächst Entfernen von lipiden Bestandteilen mittels überkritischem CO₂ ist in GB 340580 nicht offenbart.

In McCain et al. (The Composition of Foods/5th Ed., Royal Society of Chemistry, 1992) werden Getreide und Getreideprodukte bezüglich ihrer Zusammensetzung charakterisiert. Der Gehalt an Vitamin E beispielsweise liegt in herkömmlichen Getreideprodukten bei 0,21 bis 3,2 mg/100 g.

Die US Patentschrift 5,616,352 beschreibt ein Verfahren zur Herstellung von Fett- und Cholesterin-armen eihaltigen Pulverprodukten durch Extraktion mit komprimiertem Gas. Ein Einbringen von erwünschten lipophilen Bestandteilen, insbesondere ernährungsphysiologisch wertgebende Zusätze in die extrahierte Nahrungsmittelmatrix ist nicht beschrieben.

Aufgrund der Nachteile des Standes der Technik hat sich deshalb für die vorliegende Erfindung die Aufgabe gestellt, ein Verfahren zur Herstellung von Nahrungsmitteln und/oder Futtermitteln mit verbesserten physiologischen Eigenschaften mit Hilfe von trockenen, verdichteten Gasen bereitzustellen, das im Rahmen einer integrierten Prozessfolge zu konditionierten Nahrungsmitteln mit ernährungsphysiologischen Vorteilen führt.

Gelöst wurde diese Aufgabe mit einem Verfahren, bei dem unerwünschte lipide Bestandteile, insbesondere Triglyceride und andere Fettbegleitstoffe, aus der Nahrungsmittel-Matrix durch Extraktion mit Hilfe von überkritischem CO₂, gegebenenfalls mit einem Anteil von bis zu 50 Gew.-% Propan, zumindest teilweise entfernt werden, bei dem anschließend die unerwünschten extrahierten lipiden Bestandteile nach bekannten Methoden abgetrennt und in die extrahierte Nahrungsmittel-Matrix erwünschte lipophile Bestandteile, insbesondere ernährungsphysiologisch wertgebende Zusätze, mit Hilfe von verdichtetem CO₂, gegebenenfalls mit einem Anteil bis zu 50 Gew.-% Propan, homogen eingebracht werden.

Neben den angestrebten Vorteilen, wie bessere Dosierbarkeit, homogene Verteilung und Kombination der zuzusetzenden Bestandteile, war es hierbei völlig überraschend, dass auch die Stabilität und Lagerfähigkeit des so hergestellten Nahrungs- oder Futtermittels signifikant gesteigert werden konnte und dass durch die Kombination von Extraktion und Anreicherung neuartige Nahrungsmittel auf natürlicher Basis möglich werden, was zudem auf äußerst wirtschaftliche und schonende Weise geschieht.

Nahrungs- und Futtermittel werden somit in einem neuen, kombinierten Prozessverfahren hergestellt, wobei zunächst unerwünschte Bestandteile der Nahrungsmittel-Matrix durch eine Extraktion mit Kohlendioxid im überkritischen Zustand extrahiert und anschließend im gleichen Prozess ernährungsphysiologisch erwünschte Bestandteil homogen in das Nahrungsmittel eingebracht werden.

Im ersten Verfahrensschritt a) wird die Ausgangsmatrix des Nahrungsmittels mit dem überkritischen Gas(-gemisch), vorzugsweise bei Drücken zwischen 100 und 800 bar, bevorzugt oberhalb von 250 bar, sowie bei Temperaturen zwischen 31 und 100°C, bevorzugt zwischen 40 und 80°C extrahiert, z.B. in einem Festbett-Extraktor, wobei insbesondere unerwünschte lipide Bestandteile wie Fette, Öle, Triglyceride oder Sterinderivate insbesondere unpolare lipide Bestandteile zumindestteilweise entzogen werden. Die Bedingungen für den überkritischen Zustand, der in Verfahrensschritt a) eingestellt wird, betragen für CO₂ z.B. ≥ 31 °C und ≥ 73 bar.

Der spezifische Gasdurchsatz, d.h. die Menge des Gases bezogen auf die Menge des Ausgangsmaterials, richtet sich nach dem jeweiligen Prozessziel und den Eigenschaften der zu entfernenden Stoffe. Neben einer vollständigen oder weitgehenden Entfernung dieser Stoffe kann auch eine partielle Entfernung, also eine Abreicherung, eine Rolle spielen wie, beispielsweise die teilweise Reduktion einer unerwünschten Triglyceridkomponente. Typischerweise liegen die spezifischen Gasdurchsätze zwischen 3 und 100 kg Kohlendioxid pro kg Ausgangsmaterial, in der Regel reichen Mengen zwischen 10 und 50 kg pro kg aus.

Die Durchführung der Abtrennung der im Verfahrensschritt a) extrahierten lipiden Bestandteile ist völlig unkritisch, jedoch für den Erfolg des vorliegenden Verfahrens erforderlich: So kann das überkritische CO₂(-gemisch) in einer bevorzugten Verfahrensvariante nach dem Kontakt mit der Ausgangsmatrix des Nahrungsmittels und der Beladung mit dem Extrakt im Verfahrensschritt b) zur Separierung der lipiden Bestandteile einem geeigneten Abscheidersystem zugeführt werden, in dem der Extrakt vom Gas(-gemisch) getrennt wird. Vorzugsweise geschieht dies durch eine Überführung des überkritischen Gases in den gasförmigen Zustand, wobei dessen Lösevermögen dann gering ist und der Extrakt ausfällt. Nach einer Rückverflüssigung des unbeladenen Gases kann dieses ohne Probleme wieder in den überkritischen Zustand verdichtet und erneut für die Extraktionen im Rahmen eines Kreisprozesses eingesetzt werden.

Im nachfolgenden Verfahrensschritt c), der im selben Druckbehälter wie die Extraktion durchgeführt werden kann, wird verdichtetes Kohlendioxid(-gemisch) dazu eingesetzt, um erwünschte Bestandteile im zuvor extrahierten Nahrungsmittel homogen, also gleichmäßig zu verteilen.

Der Begriff verdichtete Gase wird z.B. bei E. Stahl, K.-W. Quirin, D. Gerard: "Verdichtete Gase zur Extraktion und Raffination", Springer-Verlag, Berlin/Heidelberg, 1987, Seite 12 erläutert und umfasst insbesondere alle Zustände, bei denen der Dichtewert des Gases in der Größenordnung der Dichte herkömmlicher flüssiger Lösungsmittel liegt. Umfasst vom verdichteten Zustand sind z.B. der verflüssigte sowie der überkritische Zustand, aber auch Zustände bei niedrigerem Druck oder/und niedrigerer Temperatur.

Das Gas(-gemisch) im verdichteten Zustand und mit hohem Lösevermögen wird dabei vorzugsweise über eine Schleife solange im Kreis geführt, also zirkuliert, bis eine vollständige Verteilung der erwünschten Bestandteile in der Matrix des extrahierten Nahrungsmittels erfolgt ist.

Hierfür sieht das erfindungsgemäße Verfahren vor, dass die erwünschten lipophilen Bestandteile oder auch Mischungen davon in gewünschter Menge in das Prozesssystem im flüssigen Zustand, d.h. verflüssigt oder in einem Lösemittel gelöst, eingespeist werden. Das verdichtete Kohlendioxid(-gemisch) wird unter den gleichen Bedingungen wie im Extraktionsschritt a) oder bei für die Verteilung der lipophilen Bestandteile optimierten Druck- und Temperaturbedingungen zirkuliert, bis eine vollständige Verteilung der wertgebenden Zusätze in der Matrix des Nahrungsmittels erfolgt ist: Der geeignete Druckbereich liegt also wiederum zwischen 100 und 800 bar, die bevorzugten Temperaturen zwischen 31 und 100°C.

Für das homogene Einbringen sind in Abhängigkeit von den zu verteilenden Bestandteilen zwischen 3 und 100 kg Kohlendioxid pro kg Nahrungsmittel notwendig. Dies bedeutet, dass 1 kg Kohlendioxid unter den erfindungsgemäßen Bedingungen 3 bis 100 mal jeweils 1 kg des Nahrungsmittels durchströmt, um eine homogene Verteilung der Zusätze in der Matrix des Nahrungsmittels zu erzielen.

Erwünschte lipophile Bestandteile, die homogen in eine Nahrungsmittel-Matrix entweder getrennt oder in Mischung eingebracht werden können, sind erfindungsgemäß vorzugsweise fettlösliche Vitamine, wie z.B. Vitamin A, D und/oder E, deren Derivate, wie z.B. Tocopherol-Acetate, deren Vorstufen, wie z.B. Pro-Vitamin A (β-Carotin), mehrfach ungesättigte Fettsäuren, wie Docosahexaen- und/oder Eicosapentaensäure, Liponsäure oder Sterinderivate, wie insbesondere Phytosterine.

Besonders geeignet sind auch alle Mischungen, die die einzubringenden Substanzen und insbesondere solche, die die Stabilität des Nahrungsmittels selbst und damit dessen Lagerfähigkeit erhöhen (Verlängerung des "Shelf-life"), enthalten. Unter diesem Gesichtspunkt sind antioxidativ wirkende Bestandteile, wie z.B. Vitamin E, von besonderem Interesse.

Die mit dem erfindungsgemäßen Verfahren in die Nahrungsmittel- bzw. Futtermittelmatrix eingebrachte Menge an lipophilen Bestandteilen beträgt vorzugsweise 0,1 bis 10, mehr bevorzugt 0,5 bis 5 Gew.-%, bezogen auf das Gesamtgewicht des Nahrungs- bzw. Futtermittels.

Das vorliegende Verfahren sieht in einer bevorzugten Ausführungsform ferner vor, dass am Ende des Verfahrensschrittes c) im Rahmen eines Entspannungsvorganges das verdichtete Gas(-gemisch) durch eine Druckabsenkung auf unter 200 bar, bevorzugt unter 100 bar, zunächst in den flüssigen oder nahe kritischen Zustand gebracht und damit das Lösevermögen für die erwünschten lipophilen Bestandteile reduziert wird. Dabei werden die gewünschten Stoffe in der Matrix des Nahrungsmittels fixiert. Abschließend wird das Kohlendioxid(-gemisch) von oben nach unten und ohne dass die gewünschten Stoffe dabei wesentlich aus der Matrix ausgewaschen werden, aus dem Druckbehälter abgedrückt, der anschließend auf Umgebungsdruck gebracht wird. Eine Verdampfung, also eine Überführung in den gasförmigen Zustand des Kohlendioxids auf der Matrix des Nahrungsmittels, wird so bewusst vermieden. Verfahrenstechnisch kann das nach unten abgedrückte Gas dem Abscheidersystem zugeführt und nach einem Verdichtungsvorgang in bekannter Weise rezyklisiert werden, was die vorliegende Erfindung ebenfalls vorsieht.

Mit dem erfindungsgemäßen Verfahren können z.B. Nahrungs- und/oder Futtermittel hergestellt werden, insbesondere Cerealien, wie z.B. Müslis mit mehrfach ungesättigten Fettsäuren, Kakao und Eigelbprodukte.

Das erfindungsgemäße Verfahren besitzt insbesondere dann eine hohe wirtschaftliche Relevanz, wenn im ersten Prozessschritt in der Ausgangsmatrix gleichzeitig mit der Entfernung unerwünschter lipider Substanzen aus den Nahrungsmitteln eine Anreicherung von ernährungsphysiologisch relevanten Substanzen erfolgt, die dann durch die gezielte Zufuhr von erwünschten lipophilen Substanzen in ihrem Wert synergistisch unterstützt werden.

Insgesamt erschließen sich mit dem vorliegenden Verfahren und den damit verbundenen Vorteilen breite Anwendungsmöglichkeiten, vor allem auf dem lebensmitteltechnischen Gebiet der Functional Foods und verbesserten Futtermittel, was durch die nachfolgenden Beispiele verdeutlicht wird.

### Beispiele

### Beispiel 1: Polyphenol-reicher Kakao mit Vitamin E

2 kg eines mechanisch vorentölten Kakao-Granulates (Siebung 1-3 mm, Schüttdichte ca. 0,6 kg/l) mit einem Restgehalt an Kakaobutter von 12 Gew.-% wurden in einen Einsatzbehälter (Volumen 3,5 l), der mit Metallsinter-Platten oben und unten verschlossen wurde, eingefüllt. Der Einsatzbehälter, der vollständig mit Kakao-Granulat gefüllt war, wurde in den Festbettautoklaven einer Hochdruckextraktionsanlage eingesetzt. Der Kakao wurde mit Kohlendioxid auf Druck gebracht und bei 290 bar und einer Temperatur von 35°C von unten nach oben extrahiert. Dabei wurde das mit Kakaobutter beladende Kohlendioxid nach dem Extraktor einem Abscheider zugeführt, in dem es unter Druckabsenkung und/oder Temperaturerhöhung in den gasförmigen Zustand überführt wurde, wobei die Löslichkeit für Kakaobutter herabgesetzt und die Butter abgeschieden wurde. Nach dem Abscheider wurde das unbeladene gasförmige Kohlendioxid abgekühlt, dadurch verflüssigt und einem Pufferbehälter zugeführt, von dem ausgehend es wieder zur Extraktion eingesetzt werden konnte (Kreisprozess). Nach einem spezifischen Gasdurchsatz von 40 kg Kohlendioxid pro kg Kakao-Granulat wurden 230 g Kakaobutter aus dem Abscheider entnommen. Bei einem Gasdurchsatz von 10 kg Kohlendioxid pro Stunde betrug die Extraktionszeit 8 Stunden.

Anschließend wurde der Kohlendioxid-Strom nach dem Autoklaven nicht mehr einem Abscheider zugeführt, sondern das verdichtete Kohlendioxid wurde über eine Kreislaufpumpe vom oben gelegenen Autoklavenausgang zum unten gelegenen Autoklaveneintritt gefördert (isobarer Kreislauf bei 290 bar). Dann wurden vor dem Autoklaveneintritt über eine Dosierpumpe langsam 18 g Vitamin E (α-Tocopherol) in das verdichtete Kohlendioxid eingespeist und nach der Einspeisung 30 kg Kohlendioxid zirkuliert (10 kg/h, insgesamt 3 Stunden lang). Anschließend wurde mit dem Puffer ein Druckausgleich durchgeführt und der Druck im Autoklaven auf 70 bar abgesenkt. Das Kohlendioxid wurde dann von oben nach unten aus dem Extraktor in die Vorlage abgedrückt. Nach dem Abdrücken des flüssigen Kohlendioxids erfolgte eine Restentspannung der Gasphase und das homogen mit Vitamin E durchsetzte Kakaogranulat wurde aus der Anlage entnommen.

Durch eine Reduktion des Fettgehaltes in Kakao werden die antioxidativ wirkenden polyphenolischen Verbindungen angereichert, da diese nicht im überkritischen Kohlendioxid löslich sind. Durch den anschließenden integrierten Verfahrensschritt c) des erfindungsgemäßen Verfahrens kann das Vitamin E bspw. in Mengen von ca. 7.000 ppm (0,7 Gew.-%) homogen in der Kakaomatrix verteilt werden, wobei es zwei Funktionen erfüllt: Zum einen unterstützt es unter ernährungsphysiologischen Gesichtspunkten synergistisch die antioxidative Wirkung der Polyphenole und zum anderen unter lebensmitteltechnologischen Gesichtspunkten die Stabilität des Kakaoproduktes und damit dessen Haltbarkeit. Insbesondere unter dem zweiten Gesichtspunkt ist die homogene Verteilung des Vitamin E mit Hilfe des erfindungsgemäßen Verfahrens von großer Bedeutung, da alternativ keine effektive Stabilisierung erzielt werden kann.

### Bespiel 2: Haferflocken, angereichert mit PUFA-reichen Triglyceriden und Vitamin E als Antioxidans

2 kg handelsüblicher Haferflocken (Schüttdichte ca. 0,6 kg/l) mit einem Gehalt an unpolaren Lipiden (im wesentlichen Triglyceride) von 6 Gew.-% wurden in einen Einsatzbehälter (Volumen 3,5 l), der mit Metallsinter-Platten oben und unten verschlossen wurde, eingefüllt. Der Einsatzbehälter, der vollständig mit Haferflocken gefüllt war, wurde in den Festbettautoklaven einer Hochdruckextraktionslage eingesetzt. Die Haferflocken wurden mit Kohlendioxid auf Druck gebracht und bei 350 bar und einer Temperatur von 50°C von unten nach oben extrahiert. Danach wurde das mit Haferöl beladene Kohlendioxid einem Abscheider zugeführt. Dort wurde es unter Druckabsenkung und/oder Temperaturerhöhung in den gasförmigen Zustand überführt, wobei die Löslichkeit für Haferöl herabgesetzt und das Öl abgeschieden wurde. Nach dem Abscheider wurde das unbeladene gasförmige Kohlendioxid abgekühlt, dadurch verflüssigt und einem Pufferbehälter zugeführt, von dem ausgehend es wieder zur Extraktion eingesetzt werden konnte (Kreisprozess). Nach einem spezifischen Gasdurchsatz von 20 kg Kohlendioxid pro kg Haferflocken wurden 100 g Haferöl aus dem Abscheider entnommen. Bei einem Gasdurchsatz von 10 kg Kohlendioxid pro Stunde betrug die Extraktionszeit 4 Stunden.

Anschließend wurde der Kohlendioxid-Strom nach dem Autoklaven nicht mehr einem Abscheider zugeführt, sondern das verdichtete Kohlendioxid wurde über eine Kreislaufpumpe vom oben gelegenen Autoklavenausgang zum unten gelegenen Autoklaveneintritt geführt (isobarer Kreislauf bei 290 bar). Dann wurde vor dem Autoklaveneintritt über eine Dosierpumpe langsam eine Mischung aus 57 g Triglyceriden mit einem hohen Gehalt an Arachidon- und Docosahexaensäure und 3 g Vitamin E (α-Tocopherol) in das verdichtete Kohlendioxid eingespeist und nach der Einspeisung 40 kg Kohlendioxid zirkuliert (10 kg/h, insgesamt 4 Stunden lang). Anschließend wurde mit dem Puffer ein Druckausgleich durchgeführt und der Druck im Autoklaven auf 85 bar abgesenkt. Das Kohlendioxid wurde dann von oben nach unten aus dem Extraktionsautoklaven in die Vorlage abgedrückt. Nach dem Abdrücken des flüssigen Kohlendioxids erfolgte eine Restentspannung der Gasphase und die mit den zugesetzten Stoffen homogen durchtränkten Haferflocken wurden aus der Anlage entnommen.

Hafer besitzt neben einem hohen Anteil an polaren Lipiden (ca. 2 %), der unter funktionalen Gesichtspunkten sowohl physiologisch als auch technologisch von Bedeutung ist, einen Triglyceridanteil von 3 bis 8 %. Die in den Haferflocken befindlichen polaren Lipide (im wesentlichen Phospho- und Glykolipide) wurden nicht mit dem überkritischen Kohlendioxid extrahiert, sondern in der extrahierten Matrix angereichert. Die polaren Lipide (ca. 2 bis 3 Gew.-% in Haferflocken) sind sowohl ernährungsphysiologisch als auch lebensmitteltechnologisch von Interesse. Das extrahierte Haferöl stellt aufgrund seiner sensorischen Eigenschaften ein interessantes Produkt für die Lebensmittelindustrie dar.

Die Zugabe von Vitamin E als Antioxidans ist speziell bei Hafer von Bedeutung, da die übliche Bildung bitterer Oxidationsprodukte aus den ungesättigten Fettsäuren so vermieden werden kann. Je nach dem gewünschten ernährungsphysiologischen Konzept, das mit dem Functional Food verfolgt werden soll, kann bspw. eine Anreicherung mit Ω-3- und/oder Ω-6- mehrfach ungesättigten Fettsäuren sowohl als freie Fettsäuren oder deren Ester, wie Glyceridester oder Ester mit monofunktionellen Alkoholen, insbesondere Ethanol erfolgen, wie γ-Linolensäure, Arachidonsäure, Eicosapentaensäure oder Docosahexaensäure.

Die prozessintegrierte homogene Verteilung von ca. 2,5 Gew.-% PUFA-reichen Triglyceriden und 0,12 Gew.-% Vitamin E in der Matrix der Haferflocken steht beispielhaft für ein Produktionskonzept für Cerealienbasierte Produkte in der Lebensmittelindustrie, wie z.B. Müsliprodukte, das eine Anreicherung mit ernährungsphysiologisch wertvollen Lipiden bei geringem Fettgehalt der Produkte in geringer Dosierkonzentration ermöglicht. Der Austausch der Fettphase durch höherwertigere Öle kommt dem zeitgemäßen Trend entgegen, die Kalorienaufnahme durch eine entsprechend konditionierte Nahrung zu kontrollieren. Durch die Kombination mit Antioxidantien, wie insbesondere Vitamin E, wird eine Stabilisierung der Produkte erreicht sowie der ernährungsphysiologische Produktwert erhöht.

## Patentansprüche

1. Verfahren zur Herstellung von Nahrungsmitteln und/oder Futtermitteln mit verbesserten physiologischen Eigenschaften mit Hilfe von trockenen verdichteten Gasen, **dadurch gekennzeichnet, dass**
a) unerwünschte lipide Bestandteile, insbesondere Triglyceride und andere Fettbegleitstoffe, aus der Nahrungsmittel-Matrix durch Extraktion mit Hilfe von überkritischem CO₂, gegebenenfalls mit einem Anteil von bis zu 50 Gew.-% Propan, zumindest teilweise entfernt werden,
b) anschließend die unerwünschten extrahierten lipiden Bestandteile abgetrennt werden und
c) in die extrahierte Nahrungsmittel-Matrix erwünschte lipophile Bestandteile, insbesondere ernährungsphysiologisch wertgebende Zusätze, mit Hilfe von verdichtetem CO₂, gegebenenfalls mit einem Anteil bis zu 50 Gew.-% Propan, homogen eingebracht werden.

2. Verfahren nach Anspruch 1, **dadurch gekennzeichnet, dass** der Verfahrensschritt a) bei Drücken zwischen 100 und 800 bar sowie bei Temperaturen zwischen 31 und 100°C durchgeführt wird.

3. Verfahren nach einem der Ansprüche 1 und 2, **dadurch gekennzeichnet, dass** im Anschluss an Verfahrensschritt a) das beladene Kohlendioxid zur Separierung der lipiden Bestandteile einem Abscheidersystem zugeführt wird.

4. Verfahren nach Anspruch 3, **dadurch gekennzeichnet, dass** das verdichtete Gas im Abscheider in den gasförmigen Zustand überführt wird.

5. Verfahren nach einem der Ansprüche 1 bis 4, **dadurch gekennzeichnet, dass** im Verfahrensschritt c) die einzubringenden Bestandteile unter den Zustandsbedingungen des verdichteten Gases in diesem löslich sind.

6. Verfahren nach einem der Ansprüche 1 bis 5, **dadurch gekennzeichnet, dass** im Verfahrensschritt c) die einzubringenden Bestandteile im flüssigen Zustand eingespeist werden.

7. Verfahren nach einem der Ansprüche 1 bis 6, **dadurch gekennzeichnet, dass** es sich bei den einzubringenden Bestandteilen um fettlösliche Vitamine wie z. B. Vitamin A, D und/oder E, deren Derivate wie z. B. Tocopherol-Acetate, deren Vorstufen wie z. B. Pro-Vitamin A, um mehrfach ungesättigte Fettsäuren wie z. B. Docosahexaen- und Eicosapentaensäuren, Liponsäuren oder Sterinderivate wie z. B. Phytosterine, und Antioxidantien und beliebige Mischungen davon handelt.

8. Verfahren nach einem der Ansprüchen 1 bis 7, **dadurch gekennzeichnet, dass** der Verfahrensschritt c) bei Drücken zwischen 100 und 800 bar sowie bei Temperaturen zwischen 31 und 100°C durchgeführt wird.

9. Verfahren nach einem der Ansprüche 1 bis 8, **dadurch gekennzeichnet, dass** im Verfahrensschritt c) das verdichtete Gas(-gemisch) im Kreis geführt wird.

10. Verfahren nach einem der Ansprüchen 1 bis 9, **dadurch gekennzeichnet, dass** am Ende des Verfahrensschrittes c) die Löslichkeit der einzubringenden Bestandteile bei Drücken von 200 bar reduziert wird, das dann flüssige Gas(-gemisch) von oben nach unten aus dem Druckbehälter abgedrückt und anschließend auf Umgebungsdruck gebracht wird.

11. Verfahren nach einem der Ansprüchen 1 bis 10, **dadurch gekennzeichnet, dass** das abgetrennte Gas(-gemisch) im verdichteten Zustand rezyklisiert wird.

## Claims

1. Process for producing foods and/or animal feeds with improved physiological properties with the aid of dry compressed gases, **characterized in that**
a) undesired lipid components and in particular triglycerides and other accompanying fatty substances are at least partially removed from the food matrix by extraction with the aid of supercritical CO₂ optionally with a proportion of up to 50 % by weight propane,
b) subsequently the undesired extracted lipid components are separated and
c) desired lipophilic components and in particular additives giving nutritional physiological value are homogenously introduced into the extracted food matrix with the aid of compressed CO₂ optionally with a proportion of up to 50 % by weight propane.

2. Process as claimed in claim 1, **characterized in that** the process step a) is carried out at pressures between 100 and 800 bar as well as at temperatures between 31 and 100°C.

3. Process as claimed in one of the claims 1 and 2, **characterized in that** after process step a) the loaded carbon dioxide is fed into a separator system to separate the lipid components.

4. Process as claimed in claim 3, **characterized in that** the compressed gas is converted in the separator into a gaseous state.

5. Process as claimed in one of the claims 1 to 4, **characterized in that** in process step c) the components that are to be introduced are soluble in the compressed gas under the conditions of state of the compressed gas.

6. Process as claimed in one of the claims 1 to 5, **characterized in that** the components to be introduced in process step c) are fed in in a liquid state.

7. Process as claimed in one of the claims 1 to 6, **characterized in that** the components to be introduced are fat-soluble vitamins such as vitamin A, D and/or E, derivatives thereof such as tocopherol acetates, precursors thereof such as pro-vitamin A, polyunsaturated fatty acids such as docosahexaenoic and eicosapentaenoic acid, liponic acid or sterol derivatives such as phytosterols and antioxidants and any mixtures thereof.

8. Process as claimed in one of the claims 1 to 7, **characterized in that** process step c) is carried out at pressures between 100 and 800 bar as well as at temperatures between 31 and 100°C.

9. Process as claimed in one of the claims 1 to 8, **characterized in that** the compressed gas (mixture) is circulated in process step c).

10. Process as claimed in one of the claims 1 to 9, **characterized in that** the solubility of the components to be introduced is reduced at pressures of 200 bar, the gas (mixture) which is then liquid is pressed out of the pressurized container from top to bottom and finally brought to ambient pressure.

11. Process as claimed in one of the claims 1 to 10, **characterized in that** the separated gas (mixture) is recycled in a compressed state.

## Revendications

1. Procédé de préparation d'aliments et/ou d'aliments pour animaux ayant des propriétés physiologiques améliorées à l'aide de gaz comprimés secs, **caractérisé en ce que**
a) on sépare au moins partiellement les constituants lipidiques indésirables, en particulier les triglycérides et d'autres impuretés grasses de la matrice de l'aliment par extraction à l'aide de CO₂ supercritique, éventuellement avec une fraction de jusqu'à 50 % en masse de propane,
b) on sépare ensuite les constituants lipidiques indésirables extraits, et
c) dans la matrice de l'aliment extraite, on introduit de manière homogène des constituants lipophiles désirés, en particulier des additifs donnant de la valeur au regard de la physiologie nutritionnelle, à l'aide de CO₂ comprimé, éventuellement avec une fraction de jusqu'à 50 % en masse de propane.

2. Procédé selon la revendication 1, **caractérisé en ce que** l'étape de procédé a) s'effectue sous des pressions entre 100 et 800 bar, et à des températures entre 31 et 100°C.

3. Procédé selon l'une des revendications 1 et 2, **caractérisé en ce que**, après l'étape de procédé a), on envoie le dioxyde de carbone chargé dans un système séparateur pour séparer les constituants lipidiques.

4. Procédé selon la revendication 3, **caractérisé en ce que** l'on fait passer le gaz comprimé à l'état gazeux dans le séparateur.

5. Procédé selon l'une des revendications 1 à 4, **caractérisé en ce que**, dans l'étape de procédé c), les constituants à introduire, dans les conditions d'état du gaz comprimé, sont solubles dans celui-ci.

6. Procédé selon l'une des revendications 1 à 5, **caractérisé en ce que**, dans l'étape de procédé c), les constituants à introduire sont injectés à l'état liquide.

7. Procédé selon l'une des revendications 1 à 6, **caractérisé en ce que** les constituants à introduire sont des vitamines liposolubles comme, par exemple, les vitamines A, D et/ou E, leurs dérivés comme, par exemple, des acétates de tocophérol, leurs précurseurs comme, par exemple, la provitamine A, des acides gras polyinsaturés comme, par exemple, les acides docosahexaénoïque et eicosapentaénoïque, des acides lipoïques ou des dérivés stéroliques comme, par exemple, des phytostérols, et des antioxydants et des mélanges quelconques de ces constituants.

8. Procédé selon l'une des revendications 1 à 7, **caractérisé en ce que** l'étape de procédé c) s'effectue sous des pressions entre 100 et 800 bar et à des températures entre 31 et 100°C.

9. Procédé selon l'une des revendications 1 à 8, **caractérisé en ce que**, dans l'étape de procédé c), le gaz (mélange de gaz) comprimé est mis en circulation.

10. Procédé selon l'une des revendications 1 à 9, **caractérisé en ce que**, à la fin de l'étape de procédé c), on réduit la solubilité des constituants à introduire sous des pressions de 200 bar, on chasse le gaz (ou le mélange de gaz) alors liquide du haut vers le bas du récipient sous pression, puis on l'amène sous la pression ambiante.

11. Procédé selon l'une des revendications 1 à 10, **caractérisé en ce que** le gaz (ou le mélange de gaz) séparé est recyclé à l'état comprimé.
